(19) Europäisches Patentamt
European Patent Office
Office européen des brevets

(11) **EP 3 581 290 B1**

(12) **EUROPÄISCHE PATENTSCHRIFT**

(45) Veröffentlichungstag und Bekanntmachung des Hinweises auf die Patenterteilung:
**03.03.2021 Patentblatt 2021/09**

(21) Anmeldenummer: **19176442.2**

(22) Anmeldetag: **24.05.2019**

(51) Int Cl.:
*B21D 5/00* (2006.01)   *B21D 35/00* (2006.01)
*B21D 53/28* (2006.01)   *F16D 23/02* (2006.01)

(54) **VERFAHREN ZUR HERSTELLUNG EINES SYNCHRONRINGS**

METHOD FOR MANUFACTURING A SYNCHRONISER RING

PROCÉDÉ DE FABRICATION D'UN ANNEAU DE SYNCHRONISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.06.2018 DE 102018004689**

(43) Veröffentlichungstag der Anmeldung:
**18.12.2019 Patentblatt 2019/51**

(73) Patentinhaber: **Diehl Metall Stiftung & Co. KG**
**90552 Röthenbach (DE)**

(72) Erfinder: **Arbak, Murat**
**91207 Lauf an der Pegnitz (DE)**

(74) Vertreter: **Diehl Patentabteilung**
**c/o Diehl Stiftung & Co. KG**
**Stephanstraße 49**
**90478 Nürnberg (DE)**

(56) Entgegenhaltungen:
**EP-A1- 1 056 957       WO-A1-2010/130366**
**CN-U- 204 805 378      DE-A1-102007 061 646**
**DE-A1-102011 114 055   DE-A1-102015 103 405**

EP 3 581 290 B1

**Beschreibung**

Die Erfindung betrifft ein Verfahren zur Herstellung eines Synchronrings für ein Schaltgetriebe. Aus den Druckschriften CN 204 805 378 U sowie DE 10 2007 061646 A1 sowie DE 10 2015 103405 A1 sowie EP 1 056 957 A1 sowie DE 10 2011 114055 A1 sind Verfahren zur Herstellung von Synchronringen bekannt.

Ein Verfahren nach dem Oberbegriff des Patentanspruchs 1 ist beispielsweise aus der WO 2010/130366 A1 bekannt. Bei dem bekannten Verfahren wird der Synchronring mittels mehrerer aufeinanderfolgender Umformschritte hergestellt. Zunächst wird mittels Stanzen eine Vorform aus einem Blech hergestellt. Aus der Vorform wird sodann mittels Tiefziehen und Kalibrieren ein Konuskörper hergestellt, von dem sich radial u. a. mindestens eine Zentrierlasche erstreckt. Die Zentrierlaschen werden nachfolgend in Richtung des Konuskörpers gebogen, so dass eine radial außenliegende Unterseite sich im Wesentlichen in axialer Richtung erstreckt und innerhalb eines vorgegebenen Zentrierradius liegt. An einem Synchronring sind typischerweise 3 bis 6 Zentrierlaschen angeordnet, manchmal auch mehr als 6.

In der Praxis ist es häufig so, dass eine Differenz zwischen dem Radius des Konuskörpers und dem vorgegebenen Zentrierradius relativ klein ist. Infolgedessen muss die Biegung der Zentrierlaschen in einem engen Bauraum einer dafür vorgesehenen Matrize erfolgen. Das führt nachteiligerweise dazu, dass die Zentrierlaschen an ihrer radial außenliegenden Unterseite Risse und/oder im Bereich der Anbindung an den Konuskörper Falten aufweisen. Zur Sicherstellung einer ausreichenden Festigkeit der Zentrierlasche wird diese mitunter mittels eines Laserschweißprozesses zusätzlich am Konuskörper angebunden. Das verursacht zusätzlichen Aufwand.

Aufgabe der Erfindung ist es, die Nachteile nach dem Stand der Technik zu beseitigen. Es soll insbesondere ein einfach und kostengünstig durchführbares Verfahren zur Herstellung eines Synchronrings mit mindestens einer fest daran angebundenen Zentrierlasche angegeben werden. Das Verfahren soll zu einem Synchronring führen, welcher einfach herstellbar ist und mindestens eine Zentrierlasche mit verbesserter Anbindung aufweist.

Diese Aufgabe wird durch die Merkmale des Patentanspruchs 1 gelöst. Zweckmäßige Ausgestaltungen ergeben sich aus den Merkmalen der Patentansprüche 2 bis 11.

Nach Maßgabe des erfindungsgemäßen Verfahrens wird die Zentrierlasche bzw. werden die Zentrierlaschen vor dem Schritt des Biegens derart umgeformt, dass ein radial innerer, am Konuskörper angebundener erster Abschnitt der Zentrierlasche eine maximale erste Dicke d1 aufweist, welche größer ist als eine maximale zweite Dicke d2 eines radial vom ersten Abschnitt sich erstreckenden zweiten Abschnitts. Nach der Erfindung wird die Zentrierlasche vor dem Biegen umgeformt. Die Zentrierlasche kann vor dem Umformen insgesamt die maximale erste Dicke d1 aufweisen. Die Zentrierlasche wird vorteilhafterweise beim Umformen lediglich im zweiten Abschnitt auf die zweite Dicke d2 vermindert. Im Rahmen der Erfindung kann es aber auch sein, dass beim Umformen eine ursprüngliche Dicke der Zentrierlasche sowohl im ersten als auch im zweiten Abschnitt geändert wird.

Indem die zweite Dicke d2 des radial sich vom ersten Abschnitt erstreckenden zweiten Abschnitts geringer als die erste Dicke d1 ist, kann insbesondere bei einem engen Bauraum die Zentrierlasche derart gebogen werden, dass Falten im Bereich der Biegung und/oder Risse im Bereich einer radial außenliegenden Unterseite der Zentrierlasche vermieden werden. Nach dem vorgeschlagenen Verfahren ist die Zentrierlasche nach dem Schritt des Biegens fest am Konuskörper angebunden: Es entfällt die Notwendigkeit einer zusätzlichen Anbindung mittels Schweißen. Das vorgeschlagene Verfahren lässt sich einfach und kostengünstig durchführen.

Nach einer vorteilhaften Ausgestaltung wird die Zentrierlasche derart umgeformt, dass an der Unterseite der erste Abschnitt vom zweiten Abschnitt durch eine Stufe abgesetzt ist. Eine der Unterseite gegenüberliegende Oberseite der Zentrierlasche kann sich dagegen ohne Ausbildung einer Stufe vom zweiten Abschnitt in den ersten Abschnitt hinein erstrecken. Die vorgeschlagene Umformung der Zentrierlasche lässt sich durch eine einfache Änderung herkömmlicher Werkzeuge realisieren.

Für ein Verhältnis der ersten Dicke d1 zur zweiten Dicke d2 gilt zweckmäßigerweise die folgende Beziehung:

$$d1 / d2 = n,$$

wobei n eine Zahl im Bereich von 1,1 bis 2,0 ist.

Die Zahl n liegt vorzugsweise im Bereich von 1,3 bis 1,7.

Die erste Dicke d1 kann beispielsweise im Bereich von 1,5 bis 3,0 mm, vorzugsweise im Bereich von 2,0 bis 2,5 mm sein.

Die zweite Dicke d2 liegt zweckmäßigerweise im Bereich von 1,0 bis 2,0 mm, vorzugsweise im Bereich von 1,4 bis 1,9 mm. Eine mit den vorgenannten Maßgaben umgeformte Zentrierlasche weist nach dem Biegen eine im Vergleich zum Stand der Technik deutlich verbesserte Festigkeit auf.

Nach einer vorteilhaften Ausgestaltung erfolgt die Umformung der Zentrierlasche mittels Prägen. Der Schritt des Prägens lässt sich einfach und kostengünstig mittels Massivumformung mit Folgeverbundwerkzeugen durchführen.

Nach einer weiteren vorteilhaften Ausgestaltung wird die umgeformte Zentrierlasche derart gebogen, dass nach dem Schritt des Biegens ein erster Unterseitenabschnitt des ersten Abschnitts sich radial nach außen über den Zentrierradius hinaus und ein zweiter Unterseitenabschnitt des zweiten Abschnitts sich radial höchstens bis zum Zentrierradius erstreckt. Die Erfindung macht sich insbesondere den Umstand zunutze, dass die Zentrierlasche in der Praxis nicht über ihre gesamte Höhe hinweg innerhalb des vorgegebenen Zentrierradius liegen muss. Es genügt, dass der zum zweiten Abschnitt korrespondierende zweite Unterseitenabschnitt der umgebogenen Zentrierlasche innerhalb des vorgegebenen Zentrierradius liegt. Infolgedessen kann der erste Abschnitt voluminöser ausgebildet sein und sich über den vorgegebenen Zentrierradius hinweg erstrecken. Damit kann beim Schritt des Biegens die Ausbildung von Falten im Bereich der Biegung und/oder von Rissen im Bereich der Unterseite der Zentrierlasche vermieden werden.

Vorteilhafterweise ist nach dem Schritt des Biegens eine in Axialrichtung sich erstreckende erste Höhe h1 des ersten Unterseitenabschnitts kleiner als eine in Axialrichtung sich erstreckende zweite Höhe h2 des zweiten Unterseitenabschnitts. Die Bezugsebene für die erste Höhe h1 wird durch eine weitere Unterseite des Konuskörpers im Bereich der Anbindung der Zentrierlasche gebildet. Die zweite Höhe h2 erstreckt sich vom Ende der ersten Höhe h1.

Nach einer weiteren Ausgestaltung gilt für ein Verhältnis der ersten Höhe h1 zur zweiten Höhe h2 die folgende Beziehung:

$$h1 / h2 = m,$$

wobei m eine Zahl im Bereich von 0,35 bis 0,9 ist.

Vorzugsweise liegt die Zahl m im Bereich von 0,5 bis 0,65.

Das vorgeschlagene Verfahren eignet sich insbesondere zur Herstellung eines Synchronrings aus Stahl.

Im Einklang mit den oben beschriebenen Verfahren wird bei einem Synchronring für ein Schaltgetriebe vorgeschlagen, dass ein vom Konuskörper sich erstreckender erster Unterseitenabschnitt sich radial nach außen über den Zentrierradius hinaus erstreckt und ein vom ersten Unterseitenabschnitt sich erstreckender zweiter Unterseitenabschnitt sich radial höchstens bis zum Zentrierradius erstreckt. Der vorgeschlagene Synchronring weist unter anderem mindestens eine umgebogene Zentrierlasche auf, deren radial außenliegende Unterseite im Bereich der Anbindung an den Konuskörper außerhalb des vorgegebenen Zentrierradius liegt. In diesem Bereich weist die Zentrierlasche ein vergrößertes Materialvolumen auf. Infolgedessen können im Bereich der Anbindung der Zentrierlasche an den Konuskörper Risse und/oder Falten an der Unterseite der Zentrierlasche vermieden werden. Vorteilhafterweise ist eine in Axialrichtung sich erstreckende erste Höhe h1 des ersten Unterseitenabschnitts kleiner als eine in Axialrichtung sich erstreckende zweite Höhe h2 des zweiten Unterseitenabschnitts. Die Bezugsebene für die erste Höhe h1 wird durch eine weitere Unterseite des Konuskörpers im Bereich der Anbindung der Zentrierlasche gebildet. Die zweite Höhe h2 erstreckt sich vom Ende der ersten Höhe h1.

Vorteilhafterweise ist der Synchronring aus Stahl hergestellt.

Nachfolgend wird ein Ausführungsbeispiel der Erfindung anhand der Zeichnung näher erläutert. Es zeigen:

Fig. 1   eine perspektivische Ansicht eines Synchronrings,

Fig. 2   eine Detailansicht gemäß Fig. 1,

Fig. 3   Drauf- und Schnittansichten auf ein Blechband mit unterschiedlichen Umformstadien,

Fig. 4   eine Schnittansicht gemäß der Schnittlinie A-A in Fig. 2 durch eine Zentrierlasche nach dem Stand der Technik vor dem Biegen der Zentrierlasche,

Fig. 5   eine Schnittansicht gemäß Fig. 4, wobei die Zentrierlasche umgebogen ist,

Fig. 6   eine Schnittansicht gemäß der Schnittlinie A-A in Fig. 2 durch eine erfindungsgemäße Zentrierlasche vor dem Biegen der Zentrierlasche,

Fig. 7   eine Schnittansicht gemäß Fig. 6, wobei die Zentrierlasche umgebogen ist, und

Fig. 8   eine Schnittansicht gemäß Fig. 7, wobei der Synchronring sich im Einbauzustand befindet.

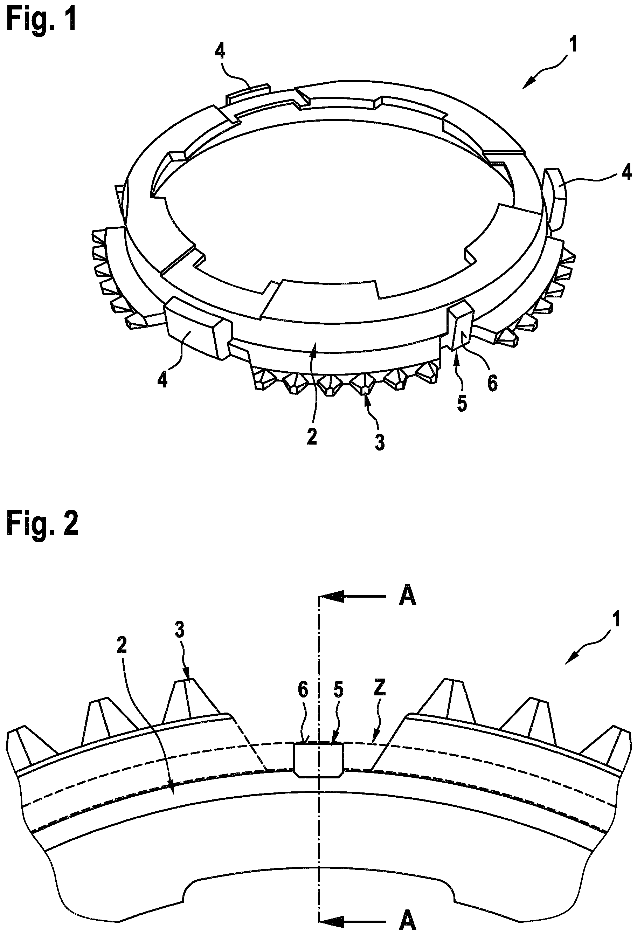

Fig. 1 zeigt einen Außenring einer "Synchronisierungseinrichtung", welche hier nicht im Einzelnen dargestellt ist. Eine Synchronisierungseinrichtung umfasst einen Außenring, optional einen (hier nicht gezeigten) Zwischenring und einen (hier nicht gezeigten) Innenring. Der "Außenring" wird in der vorliegenden Beschreibung als Synchronring 1 bezeichnet. Der Synchronring 1 weist einen Konuskörper 2 auf, an dessen Außenseite eine Sperrverzahnung 3 angeformt ist. Die Sperrverzahnung 3 weist Ausnehmungen auf, in denen Indexlaschen 4 sowie eine oder mehrere Zentrierlaschen 5 vorgesehen sind. Eine radial außenliegende Unterseite der Zentrierlaschen 5 ist mit dem Bezugszeichen 6 bezeichnet. Die Unterseite 6 liegt innerhalb eines vorgegebenen Zentrierradius Z.

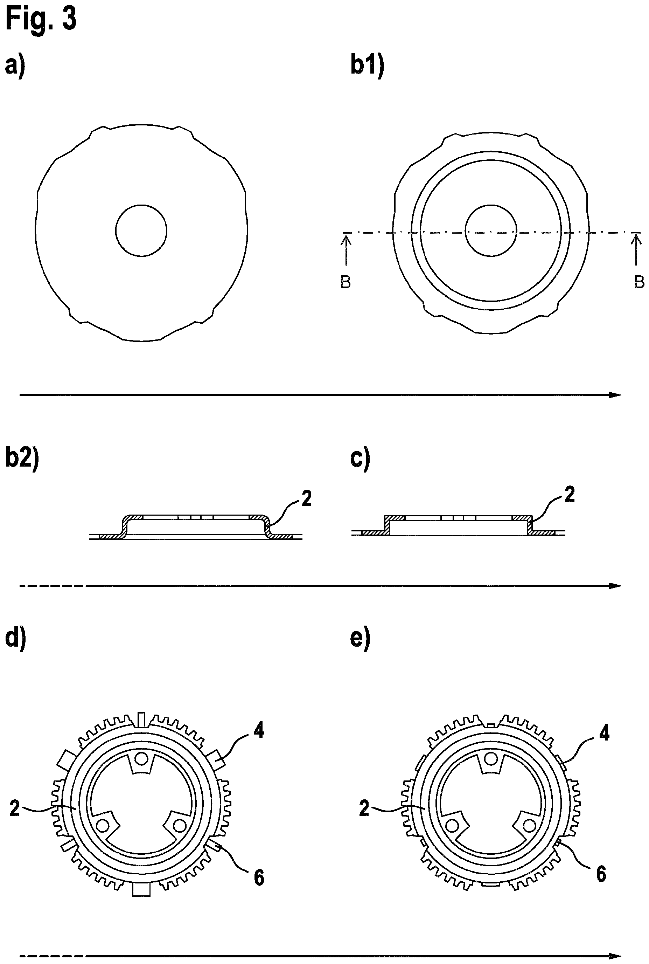

Fig. 3 zeigt ein Blechband, welches mittels Folgeverbundwerkzeugen stufenweise umgeformt worden ist. Eine Bandlaufrichtung ist in Fig. 3 durch den Pfeil wiedergegeben. Die Fig. 3 a), b1), d) und e) zeigen Draufsichten auf das Blechband. Die Fig. 3 b2) zeigt einen Schnitt gemäß der Schnittlinie B-B in Fig. 3 b1). Die Fig. 3 c) zeigt eine Schnittansicht. Zur Herstellung eines Synchronrings wird das Blechband bei Fig. 3 a) zunächst gestanzt, bei Fig. 3 b1) bzw. 3 b2) tiefgezogen, bei Fig. 3 c) konuskalibriert und bei Fig. 3 d) erneut gestanzt. In Fig. 3 d) werden durch den Stanzvorgang sowohl die Indexlaschen 4 als auch die Zentrierlasche 5 hergestellt. In Fig. 3 e) werden schließlich sowohl die Indexlaschen 4 als auch die Zentrierlasche 5 gegen den Konuskörper 2 gebogen. Das Verfahren umfasst selbstverständlich weitere Schritte, welche hier nicht näher gezeigt sind.

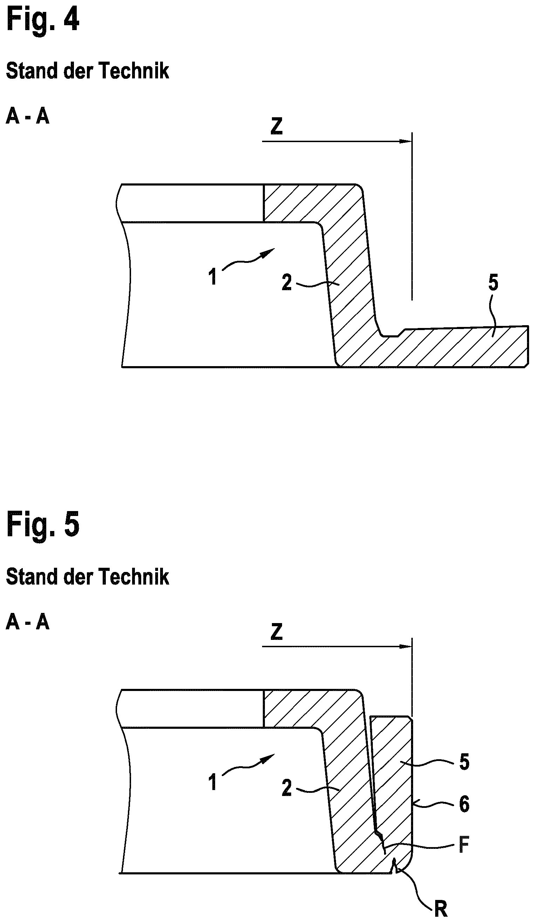

Die Fig. 4 und 5 zeigen Schnittansichten gemäß der Schnittlinie A-A in Fig. 2 für einen Synchronring nach dem Stand der Technik. Wie aus den Fig. 4 und 5 ersichtlich ist, muss zur Einhaltung des Zentrierradius Z die Zentrierlasche 5 um einen engen Radius zum Konuskörper 2 hingebogen werden. Infolgedessen bilden sich im Bereich der Biegung Falten F. Ferner können sich im Bereich der Unterseite 6 Risse R bilden (siehe Fig. 5).

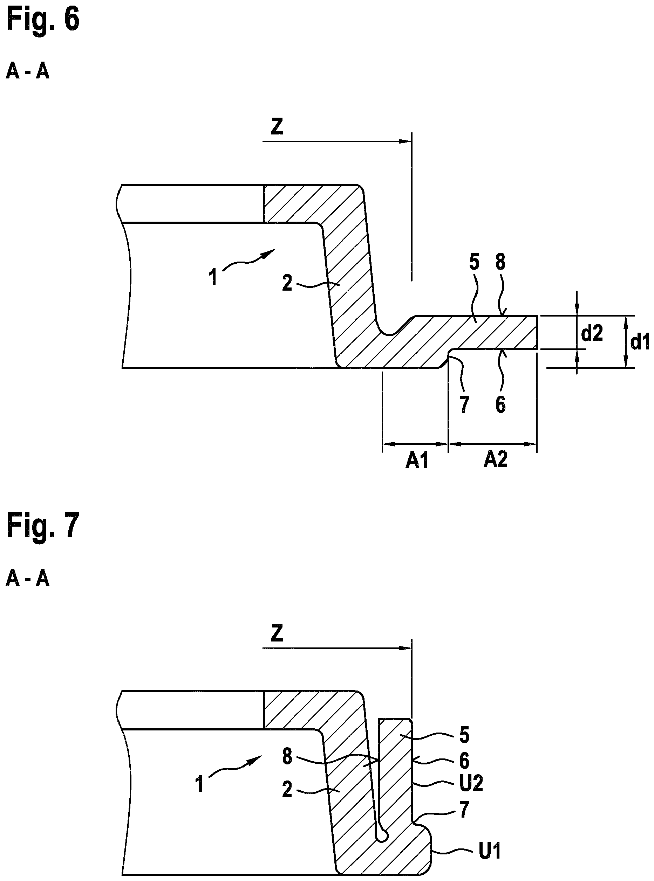

Fig. 6 und 7 zeigen eine Schnittansicht gemäß der Schnittlinie A-A in Fig. 2 für einen erfindungsgemäßen Synchronring 1. Ein am Konuskörper 2 angebundener erster Abschnitt A1 der Zentrierlasche 5 weist eine maximale erste Dicke d1 auf.

Vom ersten Abschnitt A1 erstreckt sich radial nach außen ein zweiter Abschnitt A2 der Zentrierlasche 5. Der zweite Abschnitt A2 weist eine maximale zweite Dicke d2 auf. Die zweite Dicke d2 ist kleiner als die erste Dicke d1. Die zweite Dicke d2 beträgt vorteilhafterweise 1,4 bis 1,9 mm, die erste Dicke d1 vorteilhafterweise 2,0 bis 2,5 mm. Wie aus Fig. 6 ersichtlich ist, ist die Zentrierlasche 5 derart umgeformt, dass an der Unterseite 6 der erste Abschnitt A1 vom zweiten Abschnitt A2 durch eine Stufe 7 abgesetzt ist. Eine der Unterseite 6 gegenüberliegende Oberseite 8 der Zentrierlasche 5 erstreckt sich vom zweiten Abschnitt A2 eben, d. h. ohne Ausbildung einer Stufe, in den ersten Abschnitt A1.

Fig. 7 zeigt die Zentrierlasche 5 im umgebogenen Zustand. Die Unterseite 6 der Zentrierlasche 5 weist radial nach außen, die Oberseite 8 weist zum Konuskörper 2 hin. Ein zum ersten Abschnitt A1 korrespondierender erster Unterseitenabschnitt U1 ragt über den Zentrierradius Z hinaus. Ein zum zweiten Abschnitt A2 korrespondierender zweiter Unterseitenabschnitt U2 befindet sich innerhalb des Zentrierradius Z.

Wie aus einem Vergleich der Fig. 5 und 7 deutlich hervorgeht, weist ein nach dem erfindungsgemäßen Verfahren hergestellter Synchronring im Bereich der Umbiegung der Zentrierlasche 5 ein höheres Materialvolumen auf. Infolgedessen wird die Ausbildung von Rissen R bzw. Falten F vermieden.

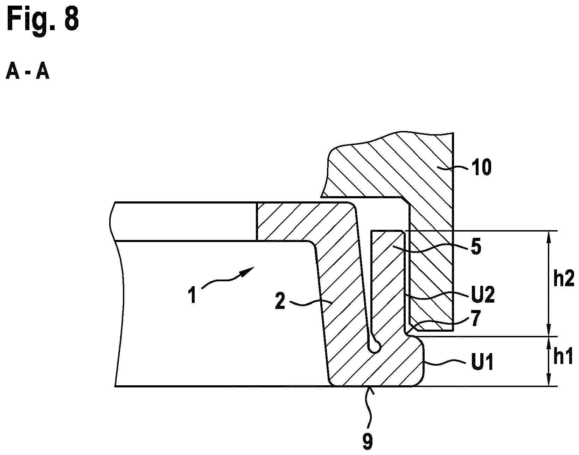

Fig. 8 zeigt eine Ansicht des Synchronrings gemäß Fig. 7 in Einbauzustand. Mit dem Bezugszeichen 10 ist eine Nabe bzw. Synchronkörper bezeichnet. Die Zentrierlasche 5 weist im umgebogenen Zustand im Bereich des ersten Unterseitenabschnitts U1 bezüglich einer durch den Konuskörper 2 gegebenen weiteren Unterseite 9 eine erste Höhe h1 auf. Der zweite Unterseitenabschnitt U2 der Zentrierlasche 5 weist im umgebogenen Zustand eine zweite Höhe h2 auf. Für das Verhältnis h1 / h2 gilt vorzugsweise ein Zahlenbereich von 0,5 bis 0,65. Die erste Höhe h1 ist kleiner als die zweite Höhe h2.

**Bezugszeichenliste**

| | |
|---|---|
| 1 | Synchronring |
| 2 | Konuskörper |
| 3 | Sperrverzahnung |
| 4 | Indexlasche |
| 5 | Zentrierlasche |
| 6 | Unterseite |
| 7 | Stufe |
| 8 | Oberseite |
| 9 | weitere Unterseite |
| 10 | Nabe bzw. Synchronkörper |
| | |
| d1 | erste Dicke |
| d2 | zweite Dicke |
| h1 | erste Höhe |
| h2 | zweite Höhe |
| A1 | erster Abschnitt |
| A2 | zweiter Abschnitt |
| U1 | erster Unterseitenabschnitt |
| U2 | zweiter Unterseitenabschnitt |
| Z | Zentrierradius |
| R | Risse |
| F | Falten |

**Patentansprüche**

1. Verfahren zur Herstellung eines Synchronrings (1) mit einem Konuskörper (2) und mindestens einer an dessen Außenumfang vorgesehenen Zentrierlasche (5),
wobei das Verfahren die folgenden Schritte umfasst:

Herstellen der vom Konuskörper (2) radial sich erstreckenden Zentrierlasche (5) mittels Stanzen, und
Biegen der Zentrierlasche (5) in Richtung des Konuskörpers (2), so dass nach dem Biegen eine radial außenliegende Unterseite (6) der Zentrierlasche (5) abschnittsweise innerhalb eines vorgegebenen Zentrierradius (Z) liegt,
**dadurch gekennzeichnet, dass**
die Zentrierlasche (5) vor dem Schritt des Biegens derart umgeformt wird, dass ein radial innerer, am Konuskörper (2) angebundener erster Abschnitt (A1) der Zentrierlasche (5) eine maximale erste Dicke (d1) aufweist, welche größer ist als eine maximale zweite Dicke (d2) eines radial vom ersten Abschnitt sich erstreckenden zweiten Abschnitts (A2).

**2.** Verfahren nach Anspruch 1,
wobei die Zentrierlasche (5) derart umgeformt wird, dass an der Unterseite (6) erste Abschnitt (A1) vom zweiten Abschnitt (A2) durch eine Stufe (7) abgesetzt ist.

**3.** Verfahren nach einem der vorhergehenden Ansprüche,
wobei für ein Verhältnis der ersten Dicke (d1) zur zweiten Dicke (d2) die folgende Beziehung gilt:

$$d1 / d2 = n,$$

wobei n eine Zahl im Bereich von 1,1 bis 2,0.

**4.** Verfahren nach einem der vorhergehenden Ansprüche,
wobei die erste Dicke (d1) im Bereich von 1,5 bis 3,0 mm, vorzugsweise im Bereich von 2,0 bis 2,5 mm, ist.

**5.** Verfahren nach einem der vorhergehenden Ansprüche,
wobei die zweite Dicke (d2) im Bereich von 1,0 bis 2,0 mm, vorzugsweise im Bereich von 1,4 bis 1,9 mm, ist.

**6.** Verfahren nach einem der vorhergehenden Ansprüche,
wobei die Umformung der Zentrierlasche (5) mittels Prägen erfolgt.

**7.** Verfahren nach einem der vorhergehenden Ansprüche,
wobei die umgeformte Zentrierlasche (5) derart gebogen wird, dass nach dem Schritt des Biegens ein erster Unterseitenabschnitt (U1) des ersten Abschnitts (A1) sich radial nach außen über den Zentrierradius (Z) hinaus und ein zweiter Unterseitenabschnitt (U2) des zweiten Abschnitts sich radial höchstens bis zum Zentrierradius (Z) erstreckt.

**8.** Verfahren nach einem der vorhergehenden Ansprüche,
wobei nach dem Schritt des Biegens eine in Axialrichtung sich erstreckende erste Höhe (h1) des ersten Unterseitenabschnitts (U1) kleiner ist als eine in Axialrichtung sich erstreckende zweite Höhe (h2) des zweiten Unterseitenabschnitts (U2).

**9.** Verfahren nach einem der vorhergehenden Ansprüche,
wobei für ein Verhältnis der ersten Höhe (h1) zur zweiten Höhe (h2) die folgende Beziehung gilt:

$$h1 / h2 = m,$$

wobei m eine Zahl im Bereich von 0,35 bis 0,9 ist.

**10.** Verfahren nach Anspruch 9,
wobei die Zahl m im Bereich 0,5 bis 0,65 liegt.

**11.** Verfahren nach einem der vorhergehenden Ansprüche,
wobei der Synchronring (1) aus Stahl hergestellt wird.

**Claims**

**1.** Method for producing a synchronizer ring (1) having a conical body (2) and at least one centring tab (5) provided on the outer circumference thereof, wherein the method comprises the following steps:

producing the centring tab (5), which extends radially from the conical body (2), by stamping, and
bending the centring tab (5) in the direction of the conical body (2), with the result that, after bending, a section of a radially outer bottom side (6) of the centring tab (5) lies within a predetermined centring radius (Z),
**characterized in that**,
before the bending step, the centring tab (5) is formed in such a way that a radially inner first section (A1) of the centring tab (5), which is attached to the conical body (2), has a maximum first thickness (d1) which is greater than a maximum second thickness (d2) of a second section (A2) extending radially from the first section.

**2.** Method according to Claim 1,
wherein the centring tab (5) is formed in such a way that, on the bottom side (6), the first section (A1) is offset relative to the second section (A2) by a step (7).

**3.** Method according to any one of the preceding claims, wherein the following relationship applies with respect to a ratio of the first thickness (d1) to the second thickness (d2):

$$d1 / d2 = n,$$

where n is a number in a range of from 1.1 to 2.0.

**4.** Method according to any one of the preceding claims, wherein the first thickness (d1) is in a range of from 1.5 to 3.0 mm, preferably in a range of from 2.0 to 2.5 mm.

**5.** Method according to any one of the preceding claims, wherein the second thickness (d2) is in a range of from 1.0 to 2.0 mm, preferably in a range of from 1.4 to 1.9 mm.

**6.** Method according to any one of the preceding claims, wherein the forming of the centring tab (5) is accomplished by means of embossing.

**7.** Method according to any one of the preceding claims, wherein the formed centring tab (5) is bent in such a way that, after the bending step, a first bottom side section (U1) of the first section (A1) extends radially outwards beyond the centring radius (Z) and a second bottom side section (U2) of the second section extends radially no further than the centring radius (Z).

**8.** Method according to any one of the preceding claims, wherein, after the bending step, a first height (h1) of the first bottom side section (U1), said height extending in the axial direction, is less than a second height (h2) of the second bottom side section (U2), said height extending in the axial direction.

**9.** Method according to any one of the preceding claims, wherein the following relationship applies with respect to a ratio of the first height (h1) to the second height (h2):

$$h1 \ / \ h2 = m,$$

where m is a number in a range of from 0.35 to 0.9.

**10.** Method according to Claim 9, wherein the number m is in a range of from 0.5 to 0.65.

**11.** Method according to any one of the preceding claims, wherein the synchronizer ring (1) is produced from steel.

**Revendications**

**1.** Procédé de réalisation d'une bague de synchronisation (1) pourvue d'un corps conique (2) et d'au moins une patte de centrage (5) prévue sur la périphérie extérieure de celui-ci, le procédé comprenant les étapes suivantes :

réaliser la patte de centrage (5) s'étendant radialement depuis le corps conique (2) par estampage, et
plier la patte de centrage (5) en direction du corps conique (2) de sorte que, après pliage, un côté inférieur radialement extérieur (6) de la patte de centrage (5) se trouve par portions à l'intérieur d'un rayon de centrage (Z) prédéterminé, **caractérisé en ce que** la patte de centrage (5) est déformée avant l'étape de pliage de telle sorte qu'une première portion radialement intérieure (A1), reliée au corps conique (2), de la patte de centrage (5) a une première épaisseur maximale (d1) qui est supérieure à une deuxième épaisseur maximale (d2) d'une deuxième portion (A2) s'étendant radialement depuis la première portion.

**2.** Procédé selon la revendication 1, la patte de centrage (5) étant déformée de telle manière que sur le côté inférieur (6) la première portion (A1) est séparée de la deuxième portion (A2) par un gradin (7).

**3.** Procédé selon l'une des revendications précédentes, pour un rapport de la première épaisseur (d1) à la deuxième épaisseur {d2), la relation suivante s'applique :

$$d1/d2 = n,$$

n étant un nombre compris entre 1,1 et 2,0.

**4.** Procédé selon l'une des revendications précédentes, la première épaisseur (d1) étant dans la gamme de 1,5 à 3,0 mm, de préférence dans la gamme de 2,0 à 2,5 mm.

**5.** Procédé selon l'une des revendications précédentes, la deuxième épaisseur (d2) étant dans la gamme de 1,0 à 2,0 mm, de préférence dans la gamme de 1,4 à 1,9 mm.

**6.** Procédé selon l'une des revendications précédentes, la patte de centrage (5) est déformée par matriçage.

**7.** Procédé selon l'une des revendications précédentes, la patte de centrage déformée (5) étant pliée de telle manière que, après l'étape de pliage, une première portion côté inférieur (U1) de la première portion (A1) s'étende radialement vers l'extérieur au-delà du rayon de centrage (Z) et une deuxième portion côté inférieur (U2) de la deuxième portion s'étende radialement au maximum jusqu'au rayon de centrage (Z).

**8.** Procédé selon l'une des revendications précédentes,

après l'étape de pliage, une première hauteur (h1), qui s'étend dans la direction axiale, de la première portion côté inférieur (U1) étant inférieure à une deuxième hauteur (h2), qui s'étend axialement, de la deuxième portion côté inférieur (U2).

9. Procédé selon l'une des revendications précédentes,
pour un rapport de la première hauteur (h1) à la deuxième hauteur (h2), la relation suivante s'applique :

$$h1/h2 = m,$$

m étant un nombre dans la gamme de 0,35 à 0, 9.

10. Procédé selon la revendication 9,
le nombre m étant dans la gamme de 0,5 à 0,65.

11. Procédé selon l'une des revendications précédentes,
la bague de synchronisation (1) étant réalisée en acier.

# Fig. 1

# Fig. 2

# Fig. 3

## a)

## b1)

B

B

## b2)

2

## c)

2

## d)

4

2

6

## e)

4

2

6

# Fig. 4

**Stand der Technik**

A - A

Z

1    2    5

# Fig. 5

**Stand der Technik**

A - A

Z

1    2    5    6    F    R

# Fig. 6

**A - A**

# Fig. 7

**A - A**

# Fig. 8

**A - A**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 204805378 U
- DE 102007061646 A1
- DE 102015103405 A1
- EP 1056957 A1
- DE 102011114055 A1
- WO 2010130366 A1